(19) Europäisches Patentamt

European Patent Office

Office européen des brevets

(11) **EP 4 111 136 B1**

(12) **EUROPEAN PATENT SPECIFICATION**

(45) Date of publication and mention
of the grant of the patent:
**31.12.2025   Bulletin 2026/01**

(21) Application number: **21706994.7**

(22) Date of filing: **26.02.2021**

(51) International Patent Classification (IPC):
*A01B 79/00* (2006.01)   *G01B 5/00* (2006.01)
*G01B 11/02* (2006.01)   *G01B 11/06* (2006.01)
*G01C 3/08* (2006.01)   *G01C 11/06* (2006.01)
*G06T 7/579* (2017.01)   *G06T 7/73* (2017.01)
*G06T 7/62* (2017.01)   *G06V 10/10* (2022.01)
*G06V 20/10* (2022.01)   *G06V 20/64* (2022.01)

(52) Cooperative Patent Classification (CPC):
**G01C 3/08; G01B 5/0035; G01B 11/0608;
G01C 11/06; G06T 7/579; G06T 7/62; G06V 10/17;
G06V 20/10; G06V 20/64;** G06T 2200/24;
G06T 2207/10016; G06T 2207/30188

(86) International application number:
**PCT/EP2021/054830**

(87) International publication number:
**WO 2021/170804 (02.09.2021 Gazette 2021/35)**

(54) **DEVICE AND METHOD FOR DETERMINING A CROP HEIGHT**

VORRICHTUNG UND VERFAHREN ZUR BESTIMMUNG EINER ERNTEGUTHÖHE

DISPOSITIF ET PROCÉDÉ POUR DÉTERMINER UNE HAUTEUR DE RÉCOLTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **26.02.2020   EP 20159563**

(43) Date of publication of application:
**04.01.2023   Bulletin 2023/01**

(73) Proprietor: **Yara International ASA
0277 Oslo (NO)**

(72) Inventors:
• **SIELENKEMPER, Marvin
  48249 Dülmen (DE)**
• **REUSCH, Stefan
  48249 Dülmen (DE)**

(74) Representative: **AWA Sweden AB
P.O. Box 11394
404 28 Göteborg (SE)**

(56) References cited:
**WO-A1-2013/087052      WO-A1-2018/122237
DE-B3- 102008 009 753**

• **JULIEN VALENTIN ET AL: "Depth from motion
for smartphone AR", 20181204; 1077952576 -
1077952576, 4 December 2018 (2018-12-04),
pages 1 - 19, XP058422581, ISBN:
978-1-4503-6008-1, DOI: 10.1145/
3272127.3275041**

**Description**

FIELD OF THE INVENTION

The invention relates to a device and method for determining a plant status. More in particular, the invention relates to a device and method for determining a height of an agricultural product.

BACKGROUND TO THE INVENTION

For many agricultural crops, it is desirable to determine the height of the plants, their biomass or other biophysical parameters noninvasively while the crop is growing. Possible applications are yield predictions before harvest as well as optimization of rate and timing of fertilizer and agrochemicals applications. For example, the biomass of an oilseed rate crop before winter is known to be a valuable indicator of nitrogen demand in springtime.

Measuring the height of other agricultural products, such as leafy vegetables, e.g. salad and kale, cereals, e.g. wheat, corn, etc., is also important in order to follow the development of the crops and adjust farming operations such as fertilizer and crop protection products applications, irrigation.

In the case of grass for grazing, leaf production for grass is understood to be maximized by grazing to between 3.5 and 4 cm of residual height. By keeping the pasture in a growing state, a higher quality of grass will be produced in a green leafy base. Pre-grazing height can e.g. be between 8 and 9 cm, corresponding to three leaves approximately. If such grass is grazed down to between 3.5 and 4 cm, growth will be expected at 16,000 kg DM/ha.

Recently, electronic systems for determining crop height have been developed, which rely upon image acquisition for carrying out measurements. For example, WO2018/122237 discloses a device including a sensor (e.g. a mobile phone) arranged on a stick at a predetermined distance from the ground. A digital stereo image of part of a plant is recorded and the height of the plant may be determined from these images by means of image analysis. Although the prior art device often provides a satisfactory result, it would be desirable to have an even more versatile device. In particular, it would be desirable to avoid the stick and operate the device free-hand without the need for additional hardware.

Other electronic systems for determining crop height are disclosed in documents WO2013/087052 and DE102008009753. Document WO2013/087052 discloses a device including a built-in stereo camera for determining a plant parameter. Such a stereo camera is however a dedicated device which is not present in most mobile devices like smartphones or tablets. Document DE102008009753 discloses a dedicated ultrasound sensor for determining further plant parameters. It is therefore an object of the present invention to allow a user to carry out the determination with a state of the art camera, without stereoscopic capabilities, as present in mobile devices nowadays.

SUMMARY OF THE INVENTION

It is an objective of the present invention to provide an even more versatile method and device for measuring height of an agricultural product, such as oilseed rape. It will be appreciated that the method can also be used for determining a height of other agricultural products, such as kale, corn (maize), grass or other crops.

According to a first aspect of the present invention, this and other objectives are achieved by a method for measuring a crop height of an agricultural product above ground using a portable device, as defined in claim 1.

According to this approach, two distances are continuously determined from a video feed of the camera of the portable device. A first distance relates to the ground, while a second distance relates to the (top of) the agricultural product. The height of the product can then easily be determined as the difference between these distances (i.e. the first distance minus the second distance).

By the expression "video feed" is here intended a continuous stream of image frames acquired by the camera. The frame rate is typically at least five or at least ten frames per seconds (fps), and may, for a typical mobile phone, be e.g. 30 pfs or 60 fps.

With this continuous measurement approach, a user may determine the height of the agricultural product on the move, by simply holding the device above the product. The use of a video feed allows the user to walk across a field in a continuous manner. According to the previously disclosed method (WO2018/122237), the user was required to stop while the device acquired images of the agricultural product. The present invention thus allows a faster measurement of a given plot of land or field.

In order to determine the distance to ground, it is necessary that the "bare" ground is at least occasionally visible between specimens of the agricultural product. The method is thus particularly useful for products which are not too dense.

According to the invention, each distance is acquired from a distance tracking module of the portable device, which distance tracking module is configured to continuously determine one or several distances between the portable device and objects in the field of view of the camera, based on the video feed. By identifying the ground and the agricultural product in the field of view (i.e. in the video image) the first and second distances may be identified.

Such a tracking module may estimate distances based on the contents of a plurality of consecutive images (frames) but may additionally include other sensors, such as an accelerometer, a gyroscope or a time-of-flight camera.

The tracking module may further be configured to store, at regular time intervals, determined distances in a designated memory area, from which the first and second distances may be acquired after identifying the ground and the agricultural product in the video image.

Such tracking modules and memory areas are known in the art, and one example, compatible with the present invention, is the Google ArCore® library. The Google ArCore library was originally developed for mobile phone applications using virtual reality. However, it was discovered that the same library could be used in the present invention.

In some embodiments, the method includes storing a record including data representative of the determined height in a memory of the portable device and/or in a database in communication with the portable device. Hence, the measured height is available for later inspection and/or use.

The method may also include determining a position of the portable device, using a built-in position determining unit, such as a GPS unit, and storing data representative of the position in the record. Hence, the record can contain data representative of the determined height of the agricultural product and the location at which the height was determined.

The height of the product may be determined at a plurality of locations, to create a pattern of product height across an area. In this case, the method may further include estimating a height of the agricultural product for additional positions within a geographical area based on the height determined at the plurality of measured positions. Such estimating can include using interpolation and/or extrapolation. The geographical area may be user selected. The height of the agricultural product can e.g. be interpolated between heights in measured locations. The height of the agricultural product between a measured position and the perimeter of the geographical area may e.g. be estimated by extrapolation. Alternatively, or additionally, the height of the agricultural product can be estimated by averaging of the individual determined heights.

According to a further aspect of the invention, a biophysical parameter of an agricultural product within an area may be estimated by determining the crop height of the agricultural product as described above, and calculating the biophysical parameter of the agricultural product based on the determined height. Example biophysical parameters include e. g. be biomass, leaf angle, leaf size, leaf area index, and canopy cover. The biophysical parameter, e.g. the dry matter biomass in kg or kg/ha, can e.g. be determined from the determined height by a factor determined by an empirical model. The calculation may be done in a processing unit of the portable device, or in a remote processing unit.

According to a further aspect of the present invention, this and other objectives are achieved by a portable device according to claim 9.

According to yet another aspect of the present invention, this and other objectives are achieved by a computer program product including software code portions configured to, when run on the processing unit of a portable device which has been positioned above ground above an agricultural product, execute a method according to the first aspect. The computer program product may be arranged to operate under e.g. the Android operating system, Apple IOS operating system, and/or Windows operating system.

It will be appreciated that any of the aspects, features and options described in view of the method apply equally to the portable device, system, support and computer program product and vice versa. It will also be clear that any one or more of the above aspects, features and options can be combined.

BRIEF DESCRIPTION OF THE DRAWING

The present invention will be described in more detail with reference to the appended drawings, showing currently preferred, example embodiments of the invention.

Figure 1 is a perspective view of a communication device held over rows of agricultural products.
Figure 2 is a schematic block diagram of a communication device according to an embodiment of the invention.
Figure 3 shows the device in figure 2 displaying a user interface according to an embodiment of the invention.
Figure 4 is a flow-chart of a method according to an embodiment of the invention.
Figure 5 shows the device in figure 1 displaying a current field of view of the camera.

The example embodiments are given by way of non-limitative illustration. It is noted that the figures are only schematic representations of embodiments of the invention that are given by way of non-limiting example.

DETAILED DESCRIPTION

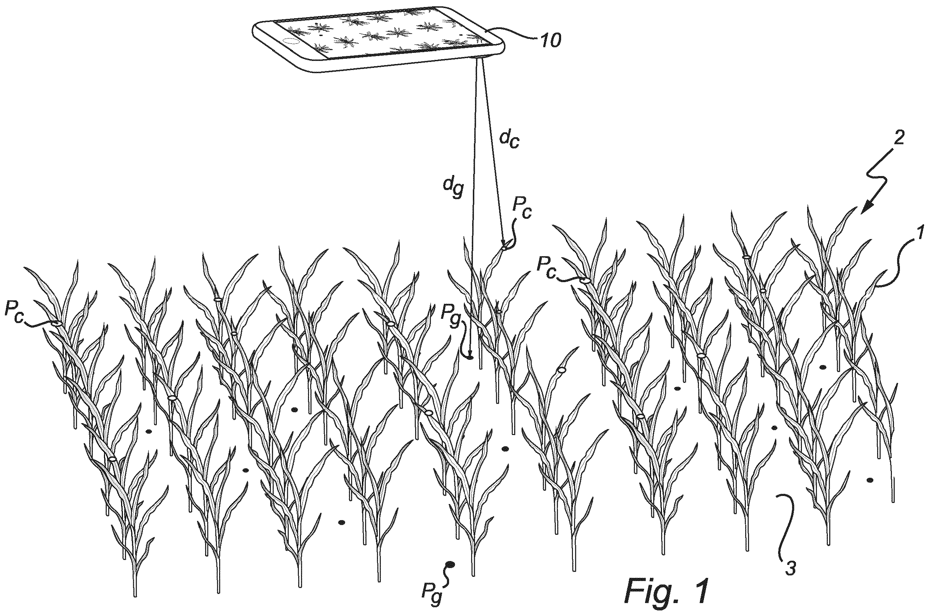

Figure 1 depicts an agricultural product in the form of plants 1 of a crop (e.g. corn) planted in rows 2, with the underlying ground 3 visible between the rows 2. The height of the plants is indicted by h. A portable device 10 is shown in a position above the plants, at a first distance $h_g$ to the ground, and at a second distance $h_c$ to the crop, i.e. to the upper parts of the plants 1.

In figure 1, the portable device 10 is illustrated as "floating" in the air, but in reality it would of course be held by or carried by a user. Alternatively, the device 10 may be mounted to a support at a suitable distance from the ground. The support can e.g. be footwear, a walking stick, a user vehicle, a post, a gate, a fence, a mobile robot, a drone aerial vehicle, an animal, or the like. Optionally, the support may be configured to support the device at a plurality of different positions, i.e. at different distances from the ground. The different mounting positions can be associated with different measurement ranges. A first measurement range can e.g. for agricultural product heights of from 0 to 2 cm. A second measurement range can e.g. for agricultural product heights of from 1 to 30 cm. A third measurement range can e.g. for agricultural product heights of from 20 to 100 cm. However, other measurement ranges are possible.

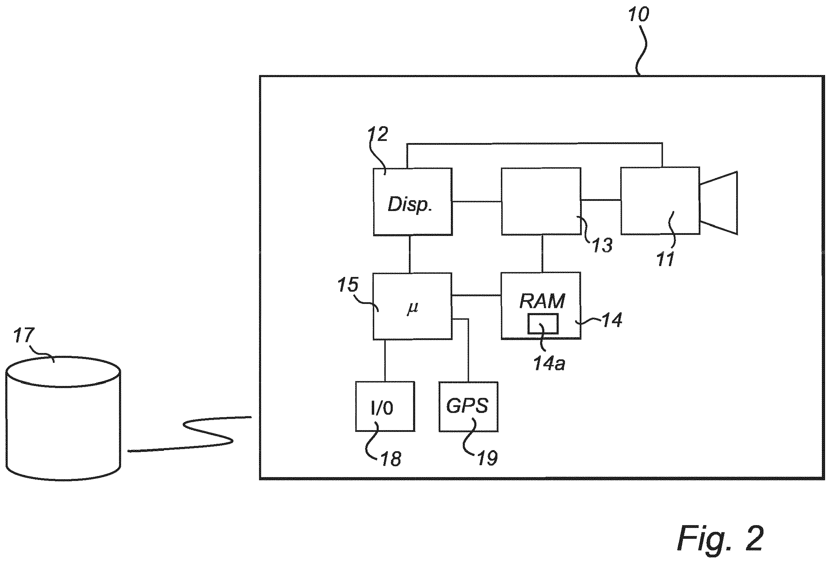

The portable device 10 is here generally illustrated as a smartphone, but the components and properties of a portable device according to the invention will be discussed in greater detail with reference to figure 2. The device includes a camera 11 configured to acquire video feed (i.e. a sequence of image frames). The video feed may have a frame rate of 10 fps (frames per second) or more. As an example, the frame rate of a typical smartphone is 30 fps or 60 fps. The currently acquired video data may be referred to as the "field of view" of the camera. The device also comprises a display 12, e.g. a touchscreen, typically having an operating mode in which it is configured to display the field of view in real-time. The device also includes a processing circuitry (processor) 13 and a working memory 14.

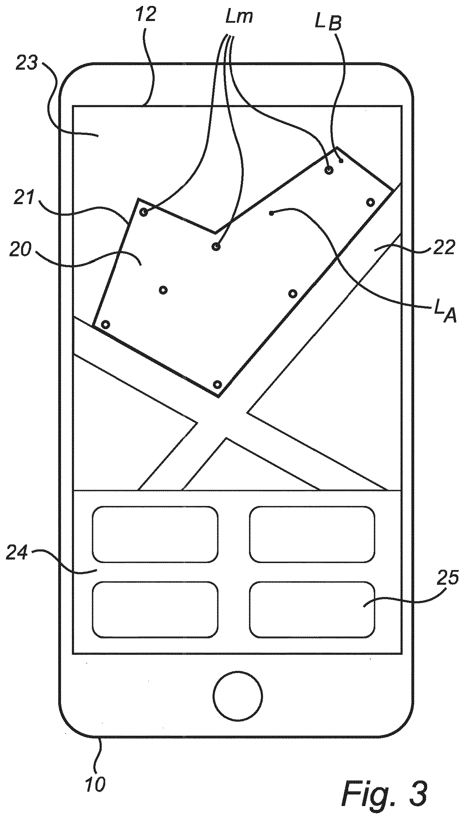

The device is further provided with a distance tracking module 15 - possibly embodied by the processor 13 or as an additional (separate or embedded) circuitry - configured to determine a distance to a set of n points in the field of view. The set of n points (x, y and z coordinates) are continuously made available in a portion 14a of the device working memory 14. The identified points P may be indicated in the field of view (see figure 3). Such a distance tracking module 15 with associated memory 14a is known in the art, and one example is the Google ArCore ® library, running on the Android ® operating system. The distance estimation is performed primarily based on the video data, i.e. a continuous flow of image frames. In order to allow distance estimation based on such a flow of images, the images need to be slightly different, in other words the camera 11 needs to move at least slightly. Additional sensors 16, such as a gyro and/or accelerometer, may also be involved in the distance estimation process.

In addition, the device 10 here is provided with a GPS 19 or similar localization device, configured to provide the position of the device in world coordinates. The device 10 further preferably has a wireless communication interface 17, in communication with a remote database 18.

According to some embodiments, data representative of an area of land on which the height of the agricultural product is to be determined may be stored in a local storage (e.g. in the memory 14) or in the remote database 18. It is, for instance, possible to mark the area of land on a map on a screen, such as a touch-screen, of the portable device. Such marking can include drawing a perimeter contour around the area of land, e.g. on the map or aerial photograph. Alternatively, or additionally, it can be possible to demarcate the area of land by physically moving the portable device along the perimeter of the area of land, and storing locations, such as GPS coordinates, of the perimeter. Alternatively, or additionally, data representative of the perimeter of the area of land can be download by or uploaded to the portable device or the database. Hence, it is possible to identify an area of land, e.g. a predetermined pasture, in which the height of the agricultural product is to be determined. It will be appreciated that the above mentioned record(s) can include an indication of the area of land, e.g. a name and/or number.

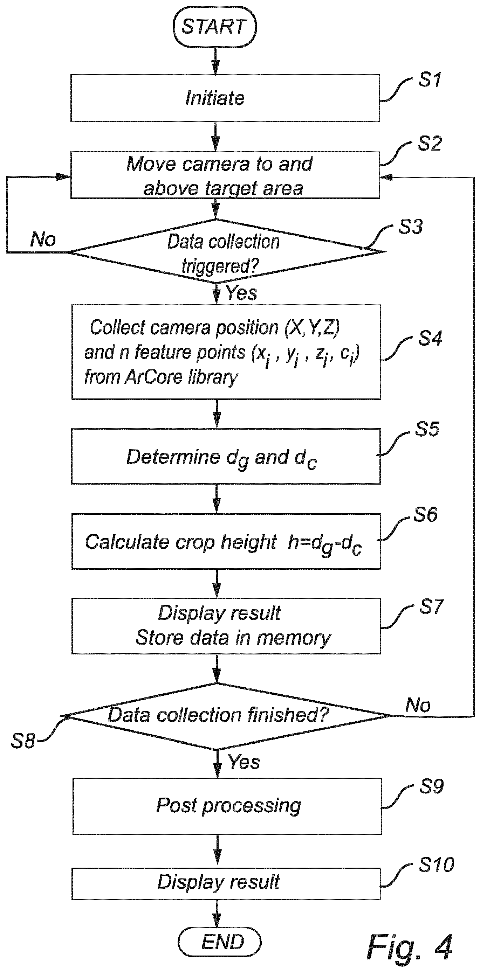

According to an embodiment of the invention, the processing unit 13 is configured to perform a method according to the flow chart in figure 4. The method may be implemented by software code stored in the memory 14 and executed by the processing unit 13. The software may for example be embodied as an app running on the device operating system, e.g. Android ®, Apple IOS ® or Windows ®.

Figure 3 shows a device 10 displaying user interface of an embodiment of the invention. The user interface here includes a display area 23 and a lower portion 24 including one or more touch screen controls 25 allowing user interaction. As will be discussed below, one control may e.g. activate determining of a crop height $h_c$ in a current location. Other controls may e.g. change the content of the display area or activate a calibration of the device.

The display area 23 here displays a representation 20 of a geographical area, previously defined or selected and entered into local or remote storage as mentioned above. The graphical representation 20 may e.g. include landmarks such as roads 22, to help a user to identify the area in the real world. The representation 20 of the area of land may e.g. be shown in overlay on a map or aerial photograph.

With reference to figure 4, first, in step S1, the software is initiated, e.g. by clearing the working memory and launching (starting) the module 13 and memory 14, e.g. the ArCore ® library of an Android ® device. Next, in step S2, the device 10 is brought to a position above the rows 2 of plants, and kept in slight motion. The distance tracking module 15 will then automatically identify a set of n points (x, y) in the image plane for which a distance (z) from the image plane is determined. The distance z is determined from the video feed, i.e. the stream of image frames acquired by the camera. Additional input, from the sensors 16, may also be used. As the device 10 is moved, the points in the set are continuously tracked.

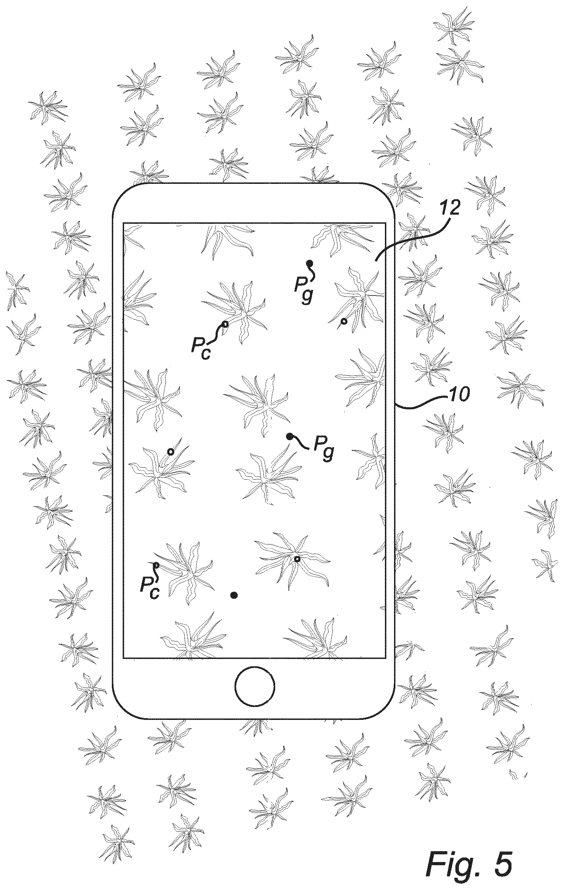

Figure 5 shows a fictive screen shot, showing an instant field of view with a plurality of points $P_g$, $P_c$ marked therein. These points indicate coordinates (x, y) in the image plane for which the module 15 has estimated a distance (z). These points are also schematically indicated in figure 1. As is clear from figures 1 and 5, a first sub-set of points $P_g$ are located on the ground between rows 2 of plants 1, while a second sub-set of points $P_c$ are located on the plants 1 themselves.

In step S3, the program control awaits a user input to trigger the data acquisition. The user input can be a hardware button (e.g. volume control) or a touch-screen based control 25 as discussed above. In response to receiving a trigger signal, program control continues to step S4, where a current camera position (X, Y, Z) is obtained from the localization system 19, and the current set of n points (x, y, z) are acquired (read out) from the ArCore ® library. As mentioned above, the coordinates x and y are taken to indicate the position in the image plane, and the coordinate z is taken to represent the normal distance from the image plane to the point.

In the next step S5, the set of n points is processed to determine a first distance $d_g$ to the ground and a second distance $d_c$ to the crops (i.e. upper part of the plants 1).

According to one approach, the distance to the ground $d_g$ and the distance to the crop $d_c$ are calculated from percentiles of all points in the image, e. g:

$$d_g = \mathrm{P}_{90}(z_i)$$

$$d_c = \mathrm{P}_{10}(z_i)$$

where $P_q(z_i)$ is the $q$-th percentile of all z values in the image.

According to another possible approach, a subset of points most distant to the camera are chosen as points $P_g$ located on the ground, while a subset of points most proximal to the camera are chosen as points $P_c$ located on the upper parts of the plants. It may be advantageous to completely disregard extreme points, which may be considered to be caused by errors or interference.

As an alternative to the latter, or as an additional criterion, the color of the points may be used to distinguish ground points from crop points. For example, the (brown) ground points $P_g$ can be separated from the (green) crop points $P_c$ through the RGB color values of the respective pixels.

The first and second distances $d_g$ and $d_c$ can then be determined as the average of the z-coordinates of the points $P_g$ and $P_c$, respectively. If these z-coordinates are labelled $z_{gi}$ and $z_{ci}$, respectively, for i=1,...,N, where N is the number of points in each subset, $d_g$ and $d_c$ are given by:

$$d_g = \frac{1}{N_g} \sum_{n=1}^{N_g} z_{gi}$$

$$d_c = \frac{1}{N_c} \sum_{n=1}^{N_c} z_{ci}$$

Optionally, each point also includes a confidence value, c. Using the same notations, $d_g$ and $d_c$ are then given by:

$$d_g = \frac{1}{\sum c_{gi}} \sum_{n=1}^{N_g} c_{gi} z_{gi}$$

$$d_c = \frac{1}{\sum c_{ci}} \sum_{n=1}^{N_c} c_{ci} z_{ci}$$

In step S6, the crop height is determined by taking the difference between the distance to the ground and the distance to the crops, i.e. $h_c = d_g - d_c$.

It is noted that it may not always be possible to determine a reliable crop height from the set of n points acquired form the ArCore library or similar module. For example, there may be an insufficient number of points $P_g$ on the ground, or a too wide spread of distances to the crop.

When a reliable measurement of the crop height has been performed, program control proceeds to step S7, to indicate the current location (X, Y, Z) on a representation 20 of a geographical area as a "measured location" $L_m$. A record containing the determined crop height $h_c$ in association with the current location may also be stored in local memory 14 or in the remote database 18.

Steps S2 - S7 are repeated until it is determined in step S8 that the data collection procedure is finished, e.g. after receiving a further user input terminating the process. At this time, a plurality of measured locations $L_m$ will be indicated in the display area 23, as shown in figure 5. It is noted that the various measured locations may be close together or far apart, depending on when the user triggers the data acquisition.

Continuing the process in figure 4, the illustrated method here includes a post processing step S9, occurring when the data collection is completed, e.g. when the user indicates that a sufficient number of locations have been measured. In this post-processing step, average crop height and/or crop biomass is calculated for the geographical area indicated by representation 20.

If required or advantageous, an estimated crop height for additional locations $L_A$, $L_B$ may be determined using e.g. interpolation or extrapolation. For example, the crop height in a location $L_A$ between two measured locations $L_m$ can be estimated by interpolation. Similarly, the crop height in a location $L_B$ between a measured location and the boundary 21 of the geographical area 20 may be determined by extrapolation. Such additional locations may serve to improve the determination of average crop height.

Based on the determined average crop height of the geographical area, the processing unit 13 may be arranged to estimate a biophysical parameter of the agricultural product within the geographical area. For example, dry matter biomass, expressed e.g. in kg or kg /ha, can be determined by multiplying the determined height by an empirical factor. The empirical model used to determine the empirical factor may be specific for crop variety and growth stage.

In a final step S10, the results for the selected geographical area, e.g. including average crop height and/or estimated biomass can be displayed to the user in an appropriate manner. For example, the touch screen controls 25 may be used to change the display area to show relevant data results for the geographical area.

When the height $h_c$ of the agricultural product is determined on at least two moments in time, the growth and/or growth rate of the agricultural product can be determined. The growth and/or growth rate may indicate whether or not the agricultural product is sufficiently supplied with nutrients and water and may therefore be used to trigger fertilizer or water application.

Alternatively, or additionally, a nutritional status of the agricultural product can be determined from a leaf colour of the agricultural product. Since in the described method already at least one image of the agricultural product is taken, leaf colour can be determined from that image.

The portable device 10 may be in communication with an applicator system, such as a fertilizer system, irrigation system or the like. The nutritional status of the agricultural product or a need for a particular nutrient and/or water, or data representative thereof, can be communicated to the applicator system. Hence the water and/or nutrients can be supplied to the agricultural product on the basis of the estimated nutritional status. It will be appreciated that the nutritional status can be determined in dependence of a position within a geographical area 20, as described above for the height.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

**1.** A method for measuring a crop height of an agricultural product above ground using a portable device (10), the method including:

- positioning (step S2) the portable device (10) above the agricultural product;
- determining (step S4, S5) a first distance (dg) between the portable device and the ground based on a video feed acquired with a camera of the portable device;
- determining (step S4, S5) a second distance (dc) between the portable device and the agricultural product based on said video feed; and
- determining (step S6) the crop height (hc) based on the determined first and second distances, wherein each distance is obtained from a distance tracking module (15) of said portable device (10), said distance tracking module being configured to continuously determine one or several distances between the portable device and objects in the field of view of the camera, based on the video feed, and wherein the distance tracking module determines the distance to a set of n points ($P_g$, $P_c$) in said field of view, wherein a first sub-set of points ($P_g$) are located on the ground (3), while a second sub-set of points ($P_c$) are located on the agricultural product (1), wherein the color of the points is used to distinguish ground points ($P_g$) from crop points ($P_c$), for example brown ground points ($P_g$) are separated from green crop points ($P_c$), and wherein said set of n points is processed to determine said first distance (dg) and said second distance (dc).

**2.** The method according to claim 1, wherein said distance tracking module (15) is further configured to store, at regular time intervals, determined distances in a designated memory area (14a), and wherein said first and second distances are acquired by accessing said designated memory area.

**3.** The method according to any one of the preceding claims, including storing a record including data representative of the determined crop height in a memory (14) of the portable device and/or in a database (18) in communication with the portable device.

**4.** The method according to claim 3, including determining a position of the portable device, using a localization sensor (19), and storing data representative of the position in the record.

**5.** The method according to claim 3 or 4, including determining the crop height at a plurality of locations (Lm) and storing a record for each of the locations.

**6.** The method according to claim 5, further comprising estimating a crop height of the agricultural product in a location within a geographical area based on the height determined at the plurality of locations, e.g. using interpolation and/or extrapolation.

7. A method for measuring a biophysical parameter of an agricultural product including:

- determining the height of the agricultural product according to any one of the preceding claims; and
- calculating a biophysical parameter of the agricultural product based on the determined height.

8. The method according to claim 8, wherein the biophysical parameter is fresh or dry biomass of said agricultural product, which is calculated based on said height and using an empirical model.

9. A portable device comprising:

a camera (11), and
a processing unit (13) configured to:

- determine a first distance between the portable device and ground above which the portable device is held based on a video feed acquired with the camera;
- determine a second distance between the portable device and an agricultural product above which the portable device is held based on said video feed; and
- determine a height of the agricultural product based on the determined first and second distances, the device further comprising a distance tracking module (15) configured to continuously determine one or several distances between the portable device and objects in the field of view of the camera, based on said video feed, and wherein the distance tracking module (15) is configured to determine the distance to a set of n points $(P_g, P_c)$ in said field of view, wherein a first sub-set of points $(P_g)$ are located on the ground (3), while a second sub-set of points $(P_c)$ are located on the agricultural product (1), wherein the color of the points is used to distinguish ground points $(P_g)$ from crop points $(P_c)$, for example brown ground points $(P_g)$ are separated from green crop points $(P_c)$, and wherein said set of n points is processed to determine said first distance (dg) and said second distance (dc).

10. The device according to claim 10, wherein said distance tracking module (15) is further configured to store, at regular time intervals, determined distances in a designated memory area (14a), from which said first and second distances are obtainable by accessing said memory area (14a).

11. The device according to any one of claims 10 - 11, including a memory (14) and/or a wireless interface (17) for communicating with a database (18), wherein the processing unit (13) is further configured to store a record including data representative of the determined crop height in the memory and/or database.

12. The device according to claim 12, further including a localization device (19), wherein the processing unit (13) is further configured to store data representative of a current position associated with the determined crop height in the record.

13. A computer program product including software code portions configured to, when run on the processing unit of a portable device which has been positioned above ground above an agricultural product, execute a method according to one of claims 1- 8.

**Patentansprüche**

1. Verfahren zur Messung einer Ernteguthöhe eines landwirtschaftlichen Produkts über dem Erdboden unter Verwendung einer tragbaren Vorrichtung (10), wobei das Verfahren Folgendes umfasst:

- Anordnen (Schritt S2) der tragbaren Vorrichtung (10) über dem landwirtschaftlichen Produkt;
- Bestimmen (Schritt S4, S5) eines ersten Abstands (dg) zwischen der tragbaren Vorrichtung und dem Erdboden basierend auf einem Videofeed, der mit einer Kamera der tragbaren Vorrichtung aufgenommen wurde;
- Bestimmen (Schritt S4, S5) eines zweiten Abstands (dc) zwischen der tragbaren Vorrichtung und dem landwirtschaftlichen Produkt basierend auf dem Videofeed; und
- Bestimmen (Schritt S6) der Ernteguthöhe (hc) basierend auf dem bestimmten ersten und zweiten Abstand, wobei jeder Abstand von einem Abstandsverfolgungsmodul (15) der tragbaren Vorrichtung (10) erhalten wird, wobei das Abstandsverfolgungsmodul dazu ausgestaltet ist, basierend auf dem Videofeed fortlaufend einen Abstand oder mehrere Abstände zwischen der tragbaren Vorrichtung und Objekten im Sichtfeld der Kamera zu bestimmen, und wobei das Abstandsverfolgungsmodul den Abstand zu einer zusammengehörigen Menge von n Punkten $(P_g, P_c)$ in dem Sichtfeld bestimmt, wobei eine erste zusammengehörige Teilmenge von Punkten $(P_g)$ sich auf dem Erdboden (3) befindet, während eine zweite zusammengehörige Teilmenge von Punkten ($P_c$) sich auf dem landwirtschaftlichen Produkt (1) befindet, wobei die Farbe der Punkte verwendet wird, um Erdbodenpunkte ($P_g$) von Erntegutpunkten ($P_c$) zu unterscheiden, beispielsweise braune Erdbodenpunkte ($P_g$) von grünen Erntegutpunkten ($P_c$) getrennt sind, und wobei die zusammengehörige Menge von n Punkten verarbeitet wird, um den ersten Abstand (dg) und den zweiten Abstand (dc) zu bestimmen.

2. Verfahren nach Anspruch 1, wobei das Abstandsverfolgungsmodul (15) ferner dazu ausgestaltet ist, in regelmäßigen Zeitintervallen bestimmte Abstände in einem eigens dafür vorgesehenen Speicherbereich (14a) zu speichern, und wobei der erste und zweite Abstand erlangt werden, indem auf den eigens vorgesehenen Speicherbereich zugegriffen wird.

3. Verfahren nach einem der vorhergehenden Ansprüche, welches das Speichern eines Datensatzes mit Daten, die für die bestimmte Ernteguthöhe repräsentativ sind, in einem Speicher (14) der tragbaren Vorrichtung und/oder in einer Datenbank (18), die mit der tragbaren Vorrichtung in Verbindung steht, umfasst.

4. Verfahren nach Anspruch 3, welches das Bestimmen einer Position der tragbaren Vorrichtung unter Verwendung eines Ortsbestimmungssensors (19) und das Speichern von Daten, die für die Position repräsentativ sind, in dem Datensatz umfasst.

5. Verfahren nach Anspruch 3 oder 4, welches das Bestimmen der Ernteguthöhe an mehreren Stellen (Lm) und das Speichern eines Datensatzes für jede der Stellen umfasst.

6. Verfahren nach Anspruch 5, das ferner das Schätzen einer Ernteguthöhe des landwirtschaftlichen Produkts an einer Stelle innerhalb eines geografischen Bereichs basierend auf der Höhe, die an den mehreren Stellen bestimmt wurde, z. B. unter Verwendung von Interpolation und/oder Extrapolation, umfasst.

7. Verfahren zur Messung eines biophysikalischen Parameters eines landwirtschaftlichen Produkts, umfassend:

   - Bestimmen der Höhe des landwirtschaftlichen Produkts nach einem der vorhergehenden Ansprüche; und
   - Berechnen eines biophysikalischen Parameters des landwirtschaftlichen Produkts basierend auf der bestimmten Höhe.

8. Verfahren nach Anspruch 8, wobei der biophysikalische Parameter die frische oder trockene Biomasse des landwirtschaftlichen Produkts ist, die basierend auf der Höhe und unter Verwendung eines empirischen Modells berechnet wird.

9. Tragbare Vorrichtung, umfassend:

   eine Kamera (11) und
   eine Verarbeitungseinheit (13), die für Folgendes ausgestaltet ist:

   - Bestimmen eines ersten Abstands zwischen der tragbaren Vorrichtung und dem Erdboden, über dem die tragbare Vorrichtung gehalten wird, basierend auf einem Videofeed, der mit der Kamera aufgenommen wurde;
   - Bestimmen eines zweiten Abstands zwischen der tragbaren Vorrichtung und einem landwirtschaftlichen Produkt, über dem die tragbare Vorrichtung gehalten wird, basierend auf dem Videofeed; und
   - Bestimmen einer Höhe des landwirtschaftlichen Produkts basierend auf dem bestimmten ersten und zweiten Abstand, wobei die Vorrichtung ferner ein Abstandsverfolgungsmodul (15) umfasst, das dazu ausgestaltet ist, basierend auf dem Videofeed fortlaufend einen Abstand oder mehrere Abstände zwischen der tragbaren Vorrichtung und Objekten im Sichtfeld der Kamera zu bestimmen, und wobei das Abstandsverfolgungsmodul (15) dazu ausgestaltet ist, den Abstand zu einer zusammengehörigen Menge von n Punkten ($P_g$, $P_c$) in dem Sichtfeld zu bestimmen, wobei eine erste zusammengehörige Teilmenge von Punkten ($P_g$) sich auf dem Erdboden (3) befindet, während eine zweite zusammengehörige Teilmenge von Punkten ($P_c$) sich auf dem landwirtschaftlichen Produkt (1) befindet, wobei die Farbe der Punkte verwendet wird, um Erdbodenpunkte ($P_g$) von Erntegutpunkten ($P_c$) zu unterscheiden, beispielsweise braune Erdbodenpunkte ($P_g$) von grünen Erntegutpunkten ($P_c$) getrennt sind, und wobei die zusammengehörige Menge von n Punkten verarbeitet wird, um den ersten Abstand (dg) und den zweiten Abstand (dc) zu bestimmen.

10. Vorrichtung nach Anspruch 10, wobei das Abstandsverfolgungsmodul (15) ferner dazu ausgestaltet ist, in regelmäßigen Zeitintervallen bestimmte Abstände in einem eigens dafür vorgesehenen Speicherbereich (14a) zu speichern, aus dem der erste und zweite Abstand erhältlich sind, indem auf den Speicherbereich (14a) zugegriffen wird.

11. Vorrichtung nach einem der Ansprüche 10 - 11, die einen Speicher (14) und/oder eine drahtlose Schnittstelle (17) zum Kommunizieren mit einer Datenbank (18) umfasst, wobei die Verarbeitungseinheit (13) ferner dazu ausgestaltet ist, einen Datensatz mit Daten, die für die bestimmte Ernteguthöhe repräsentativ sind, in dem Speicher und/oder der Datenbank zu speichern.

12. Vorrichtung nach Anspruch 12, die ferner eine Ortsbestimmungsvorrichtung (19) umfasst, wobei die Verarbeitungseinheit (13) ferner dazu ausgestaltet ist, Daten, die für eine aktuelle Position, die der bestimmten Ernteguthöhe zugeordnet ist, in dem Datensatz zu speichern.

13. Computerprogrammprodukt, das Softwarecodeabschnitte umfasst, die dazu ausgestaltet sind, wenn sie auf der Verarbeitungseinheit einer tragbaren Vorrichtung, die über dem Erdboden über einem landwirtschaftlichen Produkt angeordnet wurde, ausgeführt werden, ein Verfahren nach einem der Ansprüche 1 - 8 auszuführen.

**Revendications**

1. Procédé permettant de mesurer la hauteur d'une culture agricole au-dessus du sol à l'aide d'un dispositif portable (10), le procédé comprenant :

   - le positionnement (étape S2) du dispositif portable (10) au-dessus de la culture agricole ;
   - la détermination (étapes S4, S5) d'une première distance (dg) entre le dispositif portable et le sol à partir d'une vidéo acquise par une caméra du dispositif portable ;
   - la détermination (étapes S4, S5) d'une deuxième distance (dc) entre le dispositif portable et le produit agricole sur la base dudit flux vidéo ; et
   - la détermination (étape S6) de la hauteur de culture (hc) sur la base des première et deuxième distances déterminées, dans lequel chaque distance est obtenue à partir d'un module de suivi de distance (15) dudit dispositif portable (10), ledit module de suivi de distance étant configuré pour déterminer en continu une ou plusieurs distances entre le dispositif portable et des objets dans le champ de vision de la caméra, sur la base du flux vidéo, et dans lequel le module de suivi de distance détermine la distance à un ensemble de n points ($P_g$, $P_c$) dans ledit champ de vision, dans lequel un premier sous-ensemble de points ($P_g$) est situé sur le sol (3), tandis qu'un deuxième sous-ensemble de points ($P_c$) est situé sur le produit agricole (1), dans lequel la couleur des points est utilisée pour distinguer les points au sol ($P_g$) des points de culture ($P_c$), par exemple les points au sol bruns ($P_g$) sont séparés des points de culture verts ($P_c$), et dans lequel ledit ensemble de n points est traité pour déterminer ladite première distance (dg) et ladite deuxième distance (dc).

2. Procédé selon la revendication 1, dans lequel ledit module de suivi de distance (15) est en outre configuré pour stocker, à intervalles de temps réguliers, les distances déterminées dans une zone de mémoire désignée (14a), et dans lequel lesdites première et deuxième distances sont acquises en accédant à ladite zone de mémoire désignée.

3. Procédé selon l'une quelconque des revendications précédentes, comprenant le stockage d'un enregistrement comprenant des données représentatives de la hauteur de culture déterminée dans une mémoire (14) du dispositif portable et/ou dans une base de données (18) en communication avec le dispositif portable.

4. Procédé selon la revendication 3, comprenant la détermination d'une position du dispositif portable à l'aide d'un capteur de localisation (19) et le stockage de données représentatives de la position dans l'enregistrement.

5. Procédé selon la revendication 3 ou la revendication 4, comprenant la détermination de la hauteur des cultures à une pluralité d'emplacements (Lm) et le stockage d'un enregistrement pour chacun des emplacements.

6. Procédé selon la revendication 5, comprenant en outre l'estimation d'une hauteur des cultures du produit agricole à un emplacement dans une zone géographique sur la base de la hauteur déterminée à la pluralité d'emplacements, par exemple à l'aide d'une interpolation et/ou d'une extrapolation.

7. Procédé permettant de mesurer un paramètre biophysique d'un produit agricole, comprenant :

   - la détermination de la hauteur du produit agricole conformément à l'une quelconque des revendications précédentes ; et
   - le calcul d'un paramètre biophysique du produit agricole sur la base de la hauteur déterminée.

8. Procédé selon la revendication 8, dans lequel le paramètre biophysique est la biomasse fraîche ou sèche dudit produit agricole, qui est calculée sur la base de ladite hauteur et à l'aide d'un modèle empirique.

9. Dispositif portable comprenant :

    une caméra (11), et
    une unité de traitement (13) configurée pour :

        - déterminer une première distance entre le dispositif portable et le sol au-dessus duquel le dispositif portable est maintenu sur la base d'un flux vidéo acquis avec la caméra ;
        - déterminer une deuxième distance entre le dispositif portable et un produit agricole au-dessus duquel le dispositif portable est maintenu sur la base dudit flux vidéo ; et
        - déterminer une hauteur du produit agricole sur la base des première et deuxième distances déterminées, le dispositif comprenant en outre un module de suivi de distance (15) configuré pour déterminer en continu une ou plusieurs distances entre le dispositif portable et des objets dans le champ de vision de la caméra, sur la base dudit flux vidéo, et dans lequel le module de suivi de distance (15) est configuré pour déterminer la distance à un ensemble de n points $(P_g, P_c)$ dans ledit champ de vision, dans lequel un premier sous-ensemble de points $(P_g)$ est situé sur le sol (3), tandis qu'un deuxième sous-ensemble de points $(P_c)$ est situé sur le produit agricole (1), dans lequel la couleur des points est utilisée pour distinguer les points au sol $(P_g)$ des points de culture $(P_c)$, par exemple les points au sol bruns $(P_g)$ sont séparés des points de culture verts $(P_c)$,

    et dans lequel ledit ensemble de n points est traité pour déterminer ladite première distance (dg) et ladite deuxième distance (dc).

10. Dispositif selon la revendication 10, dans lequel ledit module de suivi de distance (15) est en outre configuré pour stocker, à intervalles de temps réguliers, les distances déterminées dans une zone de mémoire désignée (14a), à partir de laquelle lesdites première et deuxième distances peuvent être obtenues en accédant à ladite zone de mémoire (14a).

11. Dispositif selon l'une quelconque des revendications 10 à 11, comprenant une mémoire (14) et/ou une interface sans fil (17) permettant de communiquer avec une base de données (18), dans lequel l'unité de traitement (13) est en outre configurée pour stocker un enregistrement comprenant des données représentatives de la hauteur de culture déterminée dans la mémoire et/ou la base de données.

12. Dispositif selon la revendication 12, comprenant en outre un dispositif de localisation (19), dans lequel l'unité de traitement (13) est en outre configurée pour stocker des données représentatives d'une position actuelle associée à la hauteur de culture déterminée dans l'enregistrement.

13. Produit logiciel comprenant des parties de code logiciel configurées pour, lorsqu'elles sont exécutées sur l'unité de traitement d'un dispositif portable qui a été positionné au-dessus du sol au-dessus d'un produit agricole, exécuter un procédé selon l'une quelconque des revendications 1 à 8.

Fig. 1

*Fig. 2*

*Fig. 3*

Fig. 4

*Fig. 5*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018122237 A
- WO 2013087052 A
- DE 102008009753